# EUROPEAN PATENT SPECIFICATION

(11) **EP 4 220 828 B1**
(45) Date of publication and mention of the grant of the patent: **10.12.2025**
(21) Application number: 21870984.8
(22) Date of filing: 19.07.2021
(51) Int. Cl.: H01M 50/204, H01M 50/202, H01M 10/613, H01M 10/617, H01M 10/6556, H01M 10/6568, H01M 50/209

(54) **BATTERY PACK**
BATTERIEPACK
BLOC-BATTERIE

(30) Priority: 27.09.2020 CN 202011032009
(43) Date of publication of application: 02.08.2023
(73) Proprietor: BYD Company Limited, Shenzhen, Guangdong 518118 (CN)
(72) Inventor: WANG, Yongnan, Shenzhen, Guangdong 518118 (CN); ZENG, Yi, Shenzhen, Guangdong 518118 (CN); LIAO, Zhengyuan, Shenzhen, Guangdong 518118 (CN); LAI, Fuzhu, Shenzhen, Guangdong 518118 (CN); ZHENG, Weixin, Shenzhen, Guangdong 518118 (CN)
(74) Representative: Dehns Germany Partnerschaft mbB
(86) International application number: PCT/CN2021/107066
(87) International publication number: WO 2022/062606

(56) References cited:
- EP-A1- 2 343 769
- EP-A2- 0 476 484
- CN-A- 103 178 311
- CN-A- 108 091 803
- CN-A- 108 172 927
- CN-A- 110 199 430
- CN-A- 110 277 606
- CN-U- 209 747 613
- US-B2- 10 116 015

## Description

### FIELD

The present invention relates to the technical field of batteries, and particularly to a battery pack.

### BACKGROUND

A bottom plate of a battery pack in related art generally has a serpentine flow channel, and liquid inlet and outlet pipes are located at a head and tail end of the serpentine flow channel. The temperature of a head flow channel section near the liquid inlet pipe is low, leading to a good cooling effect on cells at a corresponding position; and the temperature of a tail flow channel section near the liquid outlet pipe is high, causing a poor cooling effect on cells at a corresponding position. Therefore, the overall cooling uniformity of the battery pack is poor. EP 2 343 769 A1 discloses a heating and cooling apparatus for a vehicle drive battery having a plurality of battery cells. The apparatus comprises at least one coolant line, at least one electrical heating element, and at least one common heat-transfer component for heat transfer between the battery and the coolant line and the electrical heating element.

### SUMMARY

The present invention provides a battery pack according to claim 1 having the advantage of good cooling uniformity.

The battery pack according to the present invention includes a battery assembly, including at least one battery unit, where the battery unit includes multiple cells, the length direction of each cell is a first direction, and the multiple cells are arranged in a second direction; and a tray, including at least one temperature adjustment unit, where the temperature adjustment unit includes a bottom plate and at least one temperature adjustment flow channel and a confluence flow channel formed on the bottom plate, the temperature adjustment flow channel is arranged opposite to the battery unit in a vertical direction to exchange heat with the cells, the confluence flow channel is arranged to stagger from the battery unit in the vertical direction to prevent heat exchange with the cells, the temperature adjustment flow channel and the confluence flow channel both extend in the first direction, and the temperature adjustment flow channel and the confluence flow channel are arranged in the second direction. In the first direction, one end of the temperature adjustment flow channel is an outlet end, one end of the confluence flow channel close to the outlet end is an inlet end, and the outlet end of the temperature adjustment flow channel communicates with the inlet end of the confluence flow channel. The second direction intersects the first direction. Any one of the temperature adjustment flow channels exchanges heat with at least one of the cells arranged in the second direction, and exchanges heat with at most one cell extending in the first direction. The battery pack according to the present invention has the advantage of good cooling uniformity.

In some embodiments, the temperature adjustment unit further includes: a communicating flow channel, a liquid inlet and a liquid outlet formed on the bottom plate. The liquid inlet communicates with the temperature adjustment flow channel, the liquid outlet communicates with the confluence flow channel, the communicating flow channel is located at the same side of the temperature adjustment flow channel and the confluence flow channel in the first direction, and adjacent to the outlet end of the temperature adjustment flow channel and the inlet end of the confluence flow channel. The communicating flow channel brings the outlet end of the temperature adjustment flow channel and the inlet end of the confluence flow channel into communication. The liquid inlet and the liquid outlet are both located at a side of the temperature adjustment flow channel and the confluence flow channel in the first direction away from the communicating flow channel.

In some embodiments, two ends of the bottom plate in the first direction are respectively a first end portion and a second end portion, where the liquid inlet and the liquid outlet are both located at the first end portion, and the communicating flow channel is located at the second end portion.

In some embodiments, the bottom plate includes a first bottom plate and a second bottom plate arranged opposite to each other in a thickness direction of the bottom plate, where the temperature adjustment flow channel and the confluence flow channel are defined between the first bottom plate and the second bottom plate, and the liquid inlet and the liquid outlet are formed to penetrate the first bottom plate.

In some embodiments, at least one temperature adjustment unit is a preset unit, where the preset unit includes multiple temperature adjustment flow channels and one confluence flow channel, and the outlet end of each of the temperature adjustment flow channel communicates with the inlet end of the confluence flow channel.

In some embodiments, all of the temperature adjustment flow channels in the preset unit are located at the same side of the confluence flow channel in the second direction.

In some embodiments, the tray includes two preset units, arranged at an interval in the second direction.

In some embodiments, the tray further includes a frame, where the frame is connected to the bottom plate and defines an accommodating cavity with the bottom plate. The frame includes a support beam extending in the first direction, where the support beam is located above a portion between the preset units, and the confluence flow channel in each preset unit is arranged opposite to the support beam in the vertical direction.

In some embodiments, the temperature adjustment unit includes N temperature adjustment flow channels and M confluence flow channels, where M is an integer greater than or equal to 1, and N is an integer greater than or equal to 1; and the sum of width of the N temperature adjustment flow channels in each temperature adjustment unit is greater than the sum of width of the M confluence flow channels.

In some embodiments, at least one temperature adjustment unit includes: an adapter piece, having a first flow channel and a second flow channel separated from each other therein, where the first flow channel communicates with the temperature adjustment flow channel, and the second flow channel communicates with the confluence flow channel; and an external connecting tube, including a liquid inlet pipe and a liquid outlet pipe, where the liquid inlet pipe is connected to the adapter piece and communicates with the first flow channel, and the liquid outlet pipe is connected to the adapter piece and communicates with the second flow channel.

Additional aspects and advantages of the present invention will be partly given in the following description, some of which will become apparent from the following description, or may be learned from practices of the present invention.

### BRIEF DESCRIPTION OF THE DRAWINGS

FIG. 1 is a three-dimensional diagram of a battery pack according to an embodiment of the present invention.
FIG. 2 is a cross-sectional view of a tray according to an embodiment of the present invention.
FIG. 3 is an exploded view of a bottom plate according to an embodiment of the present invention.
FIG. 4 is an exploded view of a tray according to an embodiment of the present invention.
FIG. 5 is a partial schematic view of a tray according to an embodiment of the present invention.
FIG. 6 is a partially enlarged view of part A in FIG. 4.
FIG. 7 is a cross-sectional view of a tray at a position according to an embodiment of the present invention.
FIG. 8 is a partially enlarged view of part B in FIG. 7.
FIG. 9 is a cross-sectional view of a tray at another position according to an embodiment of the present invention.
FIG. 10 is a partially enlarged view of part C in FIG. 9. and
FIG. 11 is a schematic structural diagram of a bottom plate according to another embodiment of the present invention.

### DETAILED DESCRIPTION

Embodiments of the present invention are described in detail below, and examples of the embodiments are shown in accompanying drawings, where the same or similar elements or the elements having the same or similar functions are denoted by the same or similar reference numerals throughout the description. The embodiments described below with reference to the accompanying drawings are exemplary, and provided merely for explaining the present invention, and should not be construed as a limitation on the present invention, which is defined by the appended claims.

Various embodiments or examples are provided in the disclosure below for implementing various structures of the present invention. To simplify the present invention, components and configurations of particular examples are described below. However, they are merely exemplary and do not limit the present invention. In addition, the present disclosure may repeat reference numerals and/or letters in the various examples. This repetition is for the purpose of simplicity and clarity and does not in itself dictate a relationship between the various embodiments and/or configurations discussed. Moreover, examples of various specific processes and materials are provided in the present disclosure; however, those ordinarily skilled in the art will recognize the applicability of other processes and/or the use of other materials.

A battery pack 1000 according to some embodiments of the present invention is described below with reference to accompanying drawings.

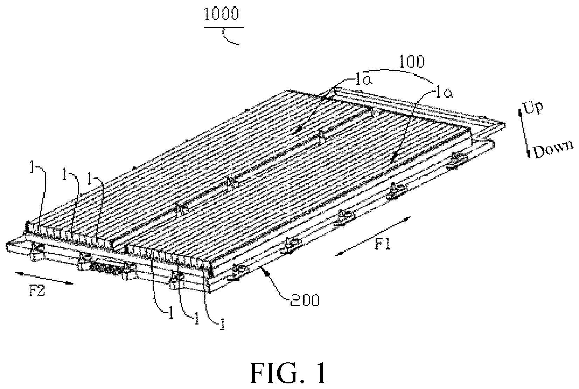

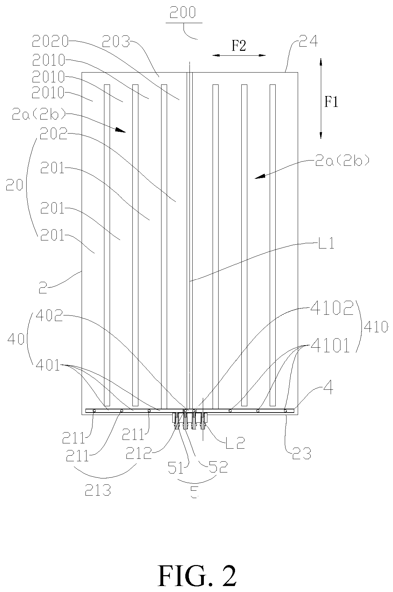

As shown in FIG. 1, the battery pack 1000 according to an embodiment of the present invention includes a battery assembly 100 and a tray 200. The battery assembly 100 includes at least one battery unit 1a. The battery unit 1a includes multiple cells 1, where the length direction of each cell 1 is a first direction F1, and the multiple cells 1 are arranged in a second direction F2; and the second direction F2 intersects the first direction F1. In some embodiments, the thickness direction of the cell 1 is the second direction F2. Referring to FIG. 2, the tray 200 includes at least one temperature adjustment unit 2a, and the temperature adjustment unit 2a is configured to adjust the temperature of the battery unit 1a.

It should be noted that "adjust the temperature" as described herein may include increasing and decreasing the temperature. For ease of description, the present invention is described in connection with an example where the temperature is decreased. In this case, the temperature adjusting fluid is a cooling liquid. Moreover, it should be noted that the number of the temperature adjustment unit 2a can be set as desired by the number of the battery unit 1a required to be cooled actually. For example, in some specific examples, the number of the temperature adjustment unit 2a is equal to the number of the battery unit 1a, to arrange them in one-to-one correspondence. Definitely, the present invention is not limited thereto. In some other examples, the number of the temperature adjustment unit 2a may be greater than or less than the number of the battery unit 1a, no further description is given here.

Referring to FIG. 2, the temperature adjustment unit 2a includes a bottom plate 2 and a temperature adjustment flow channel 201 and a confluence flow channel 202 formed on the bottom plate 2. The temperature adjustment flow channel 201 and the battery unit 1a are arranged opposite to each other in a vertical direction (as shown in FIG. 1) (that is, the temperature adjustment flow channel 201 is located right below the battery unit 1a) to exchange heat with the cells 1. The confluence flow channel 202 is arranged to stagger from the battery unit 1a in the vertical direction (that is, not opposite to each other in the vertical direction, that is, the confluence flow channel 202 is located obliquely below the battery unit 1a) so as not to exchange heat with the cells 1.

As shown in FIG. 2, both the temperature adjustment flow channel 201 and the confluence flow channel 202 extend in the first direction F1, and the temperature adjustment flow channel 201 and the confluence flow channel 202 are arranged in the second direction F2. In the first direction F1, one end of the temperature adjustment flow channel 201 is an outlet end 2010, one end of the confluence flow channel 202 close to the outlet end 2010 is an inlet end 2020, and the outlet end 2010 of the temperature adjustment flow channel 201 communicates with the inlet end 2020 of the confluence flow channel 202.

In this way, the cooling liquid can flow into the temperature adjustment flow channel 201, then flow forward through the temperature adjustment flow channel 201 along the first direction F1 toward the outlet end 2010 of the temperature adjustment flow channel 201, next flow from the outlet end 2010 of the temperature adjustment flow channel 201 to the inlet end 2020 of the confluence flow channel 202, subsequently flow reversely through the confluence flow channel 202 along the first direction F1, and flow out of the confluence flow channel 202. When the cooling liquid flows through the temperature adjustment flow channel 201, it can cool the cell 1 arranged opposite to the temperature adjustment flow channel 201 in the vertical direction. During the cooling process of the cell 1, the cooling liquid exchanges heat with the hot cell 1. The temperature of the cooling liquid after heat exchange is high, and the high-temperature cooling liquid flows out of the temperature adjustment flow channel 201 into the confluence flow channel 202. During the process of flowing through the confluence flow channel 202, the confluence flow channel 202 will not heat the cell 1, since it is arranged to stagger from the cell 1 in the vertical direction, so as to ensure the reliability of the cooling effect on the cell 1.

Briefly, Because the confluence flow channel 202 is arranged to stagger from the battery unit 1a in the vertical direction, the cell 1 is not arranged above the confluence flow channel 202. It can be understood that the temperature of the cooling liquid is low before heat exchange, and the low-temperature cooling liquid flows into the temperature adjustment flow channel 201; and the temperature of the cooling liquid is high after heat exchange, and the high-temperature cooling liquid flows into the confluence flow channel 202. Therefore, only the temperature adjustment flow channel 201 serves to cool the cell 1, and the confluence flow channel 202 only serves to direct the cooling liquid out of the temperature adjustment unit 2a without heat exchange with the cell 1, so as to ensure the cooling effect on the cell 1.

Moreover, since the outlet end 2010 of the temperature adjustment flow channel 201 and the inlet end 2020 of the confluence flow channel 202 are located at the same end and communicate with each other in the first direction F1, the cooling liquid can flow forward into the temperature adjustment flow channel 201 along the first direction F1, and then flow reversely out of the confluence flow channel 202 along the first direction F1. Therefore, an inlet end of the temperature adjustment flow channel 201 may be located at the same end with an outlet end of the confluence flow channel 202, so that the liquid inlet and liquid outlet of the temperature adjustment unit 2a are located at the same end. Compared with a situation where the liquid inlet and liquid outlet are respectively located at different ends of the temperature adjustment unit 2a, the location of the liquid inlet and liquid outlet of the cooling liquid at the same end of the temperature adjustment unit 2a reduces the size of the temperature adjustment unit 2a in the first direction F1. Accordingly, the size of the bottom plate 2 in the first direction F1 is reduced, and thus the size of the tray 200 in the first direction F1 is reduced. Moreover, the connection to an external device is facilitated.

Any one of the temperature adjustment flow channels 201 exchanges heat with at least one of the cells 1 arranged in the second direction F2. For example, one cell 1 arranged in the second direction F2 is only cooled by one temperature adjustment flow channel 201 arranged in the second direction F2; or the same cell 1 arranged in the second direction F2 is cooled by two or more temperature adjustment flow channels 201 arranged in the second direction F2; or two or more cells 1 arranged in the second direction F2 is cooled by the same temperature adjustment flow channel 201 arranged in the second direction F2.

Any one of the temperature adjustment flow channels 201 exchanges heat with at most one cell 1 extending in the first direction F1. For example, one cell 1 extending in the first direction F1 is only cooled by one temperature adjustment flow channel 201 arranged in the first direction F1; or the same cell 1 extending in the first direction F1 is cooled by two or more temperature adjustment flow channels 201 arranged in the first direction F1. However, two or more cells 1 arranged in the first direction F1 cannot be cooled by the same temperature adjustment flow channel 201 arranged in the first direction F1.

It should be noted that in the flow direction of the cooling liquid, the upstream cooling liquid has a low temperature and thus a good cooling effect, and the downstream cooling liquid has a high temperature and thus a poor cooling effect. Therefore, by the fact that any one of the temperature adjustment flow channel 201 is arranged to exchange heat with at most one cell 1 extending in the first direction F1, the cooling liquid after heat exchange with one cell 1 is avoided to further flow to exchange heat with a next cell 1. This avoids the problem of inconsistent heat dissipation effects on two cells 1 due to the inconsistent temperatures of the cooling liquid, and allows each cell 1 to have a good heat dissipation consistency.

A tray bottom plate in related art that generally has a serpentine flow channel and a liquid inlet and outlet of the cooling liquid located at a head and tail end of the serpentine flow channel. The temperature of a head flow channel section near the liquid inlet is low, leading to a good cooling effect on cells at a corresponding position; and the temperature of a tail flow channel section near the liquid outlet is high, causing a poor cooling effect on cells at a corresponding position. Therefore, the overall cooling uniformity of the battery pack is poor, and the flow resistance is high. Moreover, the liquid inlet and outlet of the cooling liquid in the tray bottom plate are respectively located at two ends of the bottom plate in the length direction, causing a large size of tray bottom plate in the length direction.

According to the battery pack 1000 in accordance with the embodiment of the present invention, because the confluence flow channel 202 is arranged to stagger from the battery unit 1a in the vertical direction, it does not exchange heat with the cell 1. Only the temperature adjustment flow channel 201 in which the low-temperature cooling liquid flows serves to cool the cell 1, and the confluence flow channel 202 in which the high-temperature cooling liquid flows serves to direct the cooling liquid out of the temperature adjustment unit 2a without cooling the cell 1. Moreover, any one of the temperature adjustment flow channels 201 is configured to exchange heat with at most one cell 1 extending in the first direction F1. Therefore, the cooling consistency of multiple cells 1 is good, and the overall heat dissipation and cooling effect are good.

Furthermore, the inlet end of the temperature adjustment flow channel 201 is located at the same end of the temperature adjustment unit 2a in the first direction with the outlet end of the confluence flow channel 202, so that the liquid inlet and liquid outlet of the temperature adjustment unit 2a are located at the same end. That is, the liquid inlet and liquid outlet of the cooling liquid are located at the same end of the temperature adjustment unit 2a to reduce the size of the temperature adjustment unit 2a in the first direction F1.

In some embodiments of the present invention, as shown in FIG. 2, the temperature adjustment unit 2a further includes: a communicating flow channel 203 formed on the bottom plate 2, a liquid inlet 211 and a liquid outlet 212. The liquid inlet 211 communicates with the temperature adjustment flow channel 201, the liquid outlet 212 communicates with the confluence flow channel 202, and the communicating flow channel 203 is located at the same side of the temperature adjustment flow channel 201 and the confluence flow channel 202 in the first direction F1 and adjacent to the outlet end 2010 of the temperature adjustment flow channel 201 and the inlet end 2020 of the confluence flow channel 202, and brings the outlet end 2010 of the temperature adjustment flow channel 201 into communication with the inlet end 2020 of the confluence flow channel 202. The liquid inlet 211 and the liquid outlet 212 are both located at the side of the temperature adjustment flow channel 201 and the confluence flow channel 202 in the first direction F1 away from the communicating flow channel 203. Namely, the cooling liquid can flow via the liquid inlet 211 into the temperature adjustment flow channel 201, and flow out of the confluence flow channel 202 via the liquid outlet 212; and the cooling liquid flowing out from the outlet end 2010 of the temperature adjustment flow channel 201 can flow through the communicating flow channel 203 into the inlet end 2020 of the confluence flow channel 202.

Therefore, the entry and exit of the cooling liquid and the flowing between the temperature adjustment flow channel 201 and the confluence flow channel 202 can be realized simply and effectively. The liquid inlet and liquid outlet of the temperature adjustment unit 2a are reliably ensured to be located at the same end, to reduce the size of the temperature adjustment unit 2a in the first direction F1.

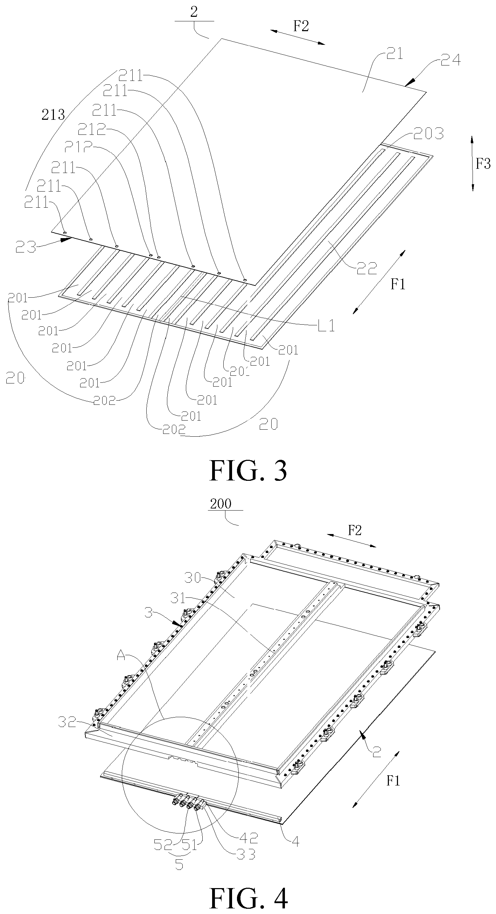

In some embodiments of the present invention, referring to FIG. 2 and FIG. 3, two ends of the bottom plate 2 in the first direction F1 are respectively a first end portion 23 and a second end portion 24, where the liquid inlet 211 and the liquid outlet 212 are both located at the first end portion 23, and the communicating flow channel 203 is located at the second end portion 24. Therefore, the cooling liquid can enter the bottom plate 2 via the liquid inlet 211, then flow forward through the entire bottom plate 2 along the first direction F1 into the communicating flow channel 203, then flow from the communicating flow channel 203 into and flow reversely through the confluence flow channel 202 along the first direction F1, and flow out of the liquid outlet 212.

Therefore, the flow path of the cooling liquid can make full use of the bottom plate 2, and run through the area where the cells 1 are placed as much as possible, to well cool the cell 1, which is conducive to the cooling consistency of the cells 1. For example, when the tray 200 includes only one temperature adjustment unit 2a, the liquid inlet 211 and the liquid outlet 212 are both located at the same side of the tray 200 in the first direction F1, and the communicating flow channel 203 is located at the other end of tray 200 in the first direction F1.

However, the present invention is not limited thereto. In other embodiments of the present invention, the liquid inlet 211, the liquid outlet 212 and the communicating flow channel 203 may not be located at two end portions of the bottom plate 2, for example, they are arranged in a middle portion of the bottom plate 2. Furthermore, it should be noted that when the tray 200 includes multiple temperature adjustment units 2a, the bottom plates 2 of two adjacent temperature adjustment units 2a may have a one-piece structure (i.e., different portions of one bottom plate), or separate structures (that is, two separate bottom plates).

As shown, according to some embodiments of the present invention, the bottom plate 2 includes a first bottom plate 21 and a second bottom plate 22 arranged opposite to each other in a thickness direction F3 of the bottom plate 2, where the temperature adjustment flow channel 201 and the confluence flow channel 202 are defined between the first bottom plate 21 and the second bottom plate 22, and the liquid inlet 211 and the liquid outlet 212 are formed to penetrate the first bottom plate 21. Therefore, the bottom plate 2 is arranged to include the first bottom plate 21 and the second bottom plate 22, to facilitate the construction of the temperature adjustment flow channel 201 and the confluence flow channel 202. The liquid inlet 211 is formed to penetrate the first bottom plate 21, to facilitate the flow-in of the cooling liquid; and the diameter of the liquid inlet 211 is not affected by the thickness of the bottom plate 2, that is, the diameter of the liquid inlet 211 may be greater than the thickness of the bottom plate 2, to reduce the flow resistance. The liquid outlet 212 is formed to penetrate the first bottom plate 21, to facilitate the flow-out of the cooling liquid; and the diameter of the liquid outlet 212 is not affected by the thickness of the bottom plate 2, that is, the diameter of the liquid outlet 212 may be greater than the thickness of the bottom plate 2, to reduce the flow resistance.

In some embodiments, the first bottom plate 21 and the second bottom plate 22 may be separate structures, or a one-piece structure. In the case of separate structures, the first bottom plate 21 and the second bottom plate 22 are fabricated separately. In the case of a one-piece structure, the temperature adjustment flow channel 201 and the confluence flow channel 202 may be extrusion formed.

In some embodiments of the present invention, as shown in FIG. 2 and FIG. 3, at least one temperature adjustment unit 2a may be a preset unit 2b, where the preset unit 2b includes multiple temperature adjustment flow channels 201 and one confluence flow channel 202, and the outlet end 2010 of each temperature adjustment flow channel 201 communicates with the inlet end 2020 of the confluence flow channel 202. Therefore, since the temperature adjustment flow channels 201 is configured to cool the cells 1, the multiple temperature adjustment flow channel 201 can increase the area that the cooling liquid flows through and the flow rate, to quickly and well cool the cells 1. In addition, one confluence flow channel 202 is configured to flow the cooling liquid after heat exchange out of the temperature adjustment unit 2a, thereby reducing the space occupied by the confluence flow channel 202, increasing the cooling area as much as possible, and further improving the cooling efficiency of the cell 1.

Moreover, since the multiple temperature adjustment flow channels 201 and the confluence flow channel 202 extend in the first direction F1, the length of each temperature adjustment flow channel 201 is short compared with the serpentine flow channel. Therefore, the temperature difference between the liquid inlet and outlet ends of each temperature adjustment flow channel 201 is small, so that the overall temperature of each temperature adjustment flow channel 201 is uniform and low. This improves the cooling consistency of the cells 1, and reduces the flow resistance of the cooling liquid, to save the energy consumption.

Referring to FIG. 2 and FIG. 3, according to some embodiments of the present invention, all of the temperature adjustment flow channels 201 in the preset unit 2b are located at the same side of the confluence flow channel 202 in the second direction F2. Since the temperature adjustment flow channels 201 is configured to cool the cells 1 and the confluence flow channel 202 is not configured to cool the cells 1, the multiple temperature adjustment flow channels 201 are all located at the same side of the confluence flow channel 202 in the second direction F2, to promote the arrangement of the multiple cells 1, and well cool the multiple cells 1.

In some embodiments of the present invention, referring to FIG. 2 and FIG. 3, the tray 200 includes two preset units 2b, and the two preset units 2b are arranged at an interval in the second direction F2. Further, the two preset units 2b are distributed symmetrically. Therefore, the symmetric distribution of the two preset units 2b facilitates the arrangement of the preset units 2b to make the structure of the bottom plate 2 become more compact, and allow two confluence flow channels 202 in the two preset units 2b to get closer or allow all the temperature adjustment flow channels 201 in the two preset units 2b to get closer. This facilitates the arrangement of the multiple cells 1, and alleviates the problem of heat transfer between the confluence flow channel 202 in one preset unit 2b and the temperature adjustment flow channel 201 in another preset unit 2b.

Referring to FIG. 2 to FIG. 4, according to some embodiments of the present invention, the tray 200 further includes a frame 3, where the frame 3 is connected to the bottom plate 2 and defines an accommodating cavity 30 with the bottom plate 2. The frame 3 includes a support beam 31 extending in the first direction F1, where the support beam 31 is located above a portion between the preset units 2b, and the confluence flow channel 202 in each preset unit 2b is arranged opposite to the support beam 31 in the vertical direction. Therefore, the support beam 31 can enhance the structural strength of the frame 3. Moreover, the arrangement of the support beam 31 right above the confluence flow channel 202 can more effectively ensure that the confluence flow channel 202 and the battery cell 1 are staggered in the vertical direction, to avoid the heat exchange of the confluence flow channel 202 with cell 1.

In specific examples shown in FIG. 2 to FIG. 4, the confluence flow channel 202 in each preset unit 2b is located at one side of the temperature adjustment flow channels 201 in the corresponding preset unit 2b close to the other preset unit 2b. This facilitates the arrangement of cells 1 and conforms to the structural layout of the frame 3. For example, to ensure the reliability of the frame 3, the support beam 31 can be generally arranged in the middle of the frame 3, and the support beam 31 rightly faces the confluence flow channel 202 of the preset unit 2b, so that the structural reliability of the frame 3 can be ensured without affecting the cooling of the cell 1.

In some embodiments of the present invention, referring to FIG. 2 and FIG. 3, the temperature adjustment unit 2a includes N temperature adjustment flow channel 201 and M confluence flow channels 202, where M is an integer greater than or equal to 1, and, N is an integer greater than or equal to 1; and the sum of width of the N temperature adjustment flow channels 201 in each temperature adjustment unit 2a is greater than the sum of width of the M confluence flow channels 202. Therefore, the area where the cooling liquid flows through in the temperature adjustment flow channel 201 is large, to effectively cool the cell 1.

In an example shown in FIG. 2, the width of the temperature adjustment flow channel 201 is a mean width in the second direction F2. The temperature adjustment flow channel 201 may be an equal-width flow channel or an unequal-width flow channel. Similarly, the width of the confluence flow channel 202 is a mean width in the second direction F2. The confluence flow channel 202 may be an equal-width flow channel or an unequal-width flow channel.

As shown in FIG. 2, according to some embodiments of the present invention, at least one temperature adjustment unit 2a includes: an adapter piece 4 and an external connecting tube 5. The adapter piece 4 has a first flow channel 401 and a second flow channel 402 separated from each other therein, where the first flow channel 401 communicates with the temperature adjustment flow channel 201, and the second flow channel 402 communicates with the confluence flow channel 202. The external connecting tube 5 includes a liquid inlet pipe 51 and a liquid outlet pipe 52, where the liquid inlet pipe 51 is connected to the adapter piece 4 and communicates with the first flow channel 401, and the liquid outlet pipe 52 is connected to the adapter piece 4 and communicates with the second flow channel 402.

As such, the cooling liquid can enter the first flow channel 401 from the liquid inlet pipe 51, and flow through the first flow channel 401 to the temperature adjustment flow channel 201. The cell 1 can be arranged opposite to the temperature adjustment flow channel 201, so the cell 1 is cooled when the cooling liquid flows through the temperature adjustment flow channel 201. During the cooling process of the cell 1, hot cell 1 exchanges heat with the cooling liquid. Therefore, the temperature of the cooling liquid at the end of the temperature adjustment flow channel 201 away from the adapter piece 4 in the first direction F1 is high. The high-temperature cooling liquid flows through the confluence flow channel 202 to the second flow channel 402. The cooling liquid flowing through the second flow channel 402 does not exchange heat with the cell 1, and can flow out of the liquid outlet pipe 52 after passing through the second flow channel 402.

Therefore, by arranging the adapter piece 4, only one set of liquid inlet pipe 51 and liquid outlet pipe 52 is required to be provided even when the number of the temperature adjustment flow channel 201 and /or the confluence flow channel 202 is greater than 1, thus reducing the number of the liquid inlet pipe 51 and the liquid outlet pipe 52, and simplifying the structural complexity. However, the present invention is not limited thereto. Multiple sets of liquid inlet pipes 51 and liquid outlet pipes 52 may also be provided.

In the related art, a tray bottom plate of a battery pack generally has a serpentine flow channel, and liquid inlet and outlet pipes are located at a head and tail end of the serpentine flow channel and at two sides of the tray bottom plate in the length direction, causing a large size of the tray bottom plate in the length direction. Moreover, the liquid inlet and outlet pipes are directly inserted into the head and tail end of the serpentine flow channel along a direction parallel to the bottom plate. With a given thickness of the tray bottom plate, the diameter of the liquid inlet and outlet pipes is limited by the thickness of the tray bottom plate, and liquid inlet and outlet pipes with a diameter smaller than the thickness of the tray bottom plate have to be used, causing a large flow resistance to the cooling liquid.

In the battery pack 1000 according to the present invention, since the liquid inlet pipe 51 is connected to the temperature adjustment flow channel 201 by the adapter piece 4 and the liquid outlet pipe 52 is connected to the confluence flow channel 202 by the adapter piece 4, the liquid inlet pipe 51 and the liquid outlet pipe 52 can be located at the same side of the temperature adjustment unit 2a in the first direction F1, giving rise to a small size of the tray 200 in the first direction F1. Moreover, by connecting the liquid inlet pipe 51 and the liquid outlet pipe 52 to the adapter piece 4, the diameter of the liquid inlet pipe 51 and the liquid outlet pipe 52 is not affected by the thickness of the bottom plate 2. With a small thickness of the bottom plate 2, a liquid inlet pipe 51 and a liquid outlet pipe 52 having a large diameter can be used, to reduce the flow resistance of the cooling liquid.

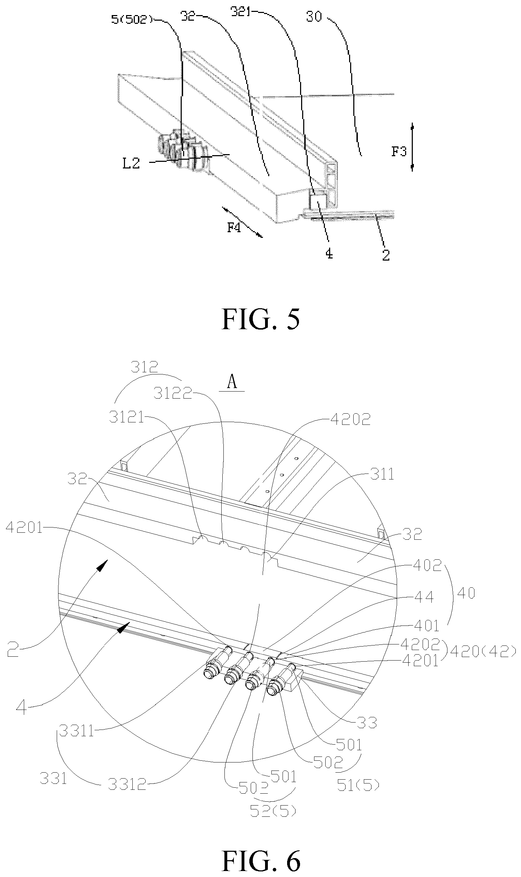

As shown in FIG. 6, in some embodiments of the present invention, the adapter piece 4 can be a one-piece structure and the adapter piece 4 has a partition groove 44. A partition can be placed in the partition groove 44 to define the first flow channel 401 and the second flow channel 402 which are separated from each other in the adapter piece 4. However, the present invention is not limited thereto. In other embodiments of the present invention, the adapter piece 4 may be directly formed with a partition structure therein. Alternatively, the adapter piece 4 is formed of multiple separate structures, where at least one separate structure defines the first flow channel 401, and at least one separate structure defines the second flow channel 402, etc.

Furthermore, one or multiple adapter piece 4 can be provided. When the tray 200 includes multiple temperature adjustment units 2a (as shown in FIG. 2 and FIG. 6), the adapter piece 4 of two adjacent temperature adjustment units 2a can be formed of separate structures, or the adapter piece 4 of two adjacent temperature adjustment units 2a can also be a one-piece structure. For example, the adapter piece 4 of a one-piece structure can be divided into multiple flow channels by a structure such as a partition, to work for corresponding temperature adjustment units 2a. Two temperature adjustment units 2a may share one adapter piece 4 and one second flow channel 402.

The tray 200 for a battery pack 1000 according to some embodiments of the present invention will be described in connection with the accompanying drawings.

As shown in FIG. 4, the tray 200 can include a bottom plate 2, a frame 3, an external connecting tube 5 and adapter piece 4. The frame 3 is connected to the bottom plate 2 and defines an accommodating cavity 30 with the bottom plate 2. The accommodating cavity 30 is configured to accommodate the battery assembly 100, and the frame 3 includes a first side beam 32. Referring to FIG. 5 and FIG. 6, an inner end 501 of the external connecting tube 5 extends into the first side beam 32, a first accommodating groove 321 is formed on the first side beam 32, the adapter piece 4 is arranged at a side of the bottom plate 2 in a thickness direction, and the adapter piece 4 is accommodated in the first accommodating groove 321. Therefore, the first accommodating groove 321 provides a mounting space for the adapter piece 4, so the first side beam 32 can protect the adapter piece 4, to reduce the damage of the adapter piece 4 from dust and corrosion. Here, it should be noted that there is on limitation on the position where the first side beam 32 is arranged. For example, the first side beam 32 can extend in a length direction of the tray 200 and arranged close to a side edge of the tray 200 in a width direction, or extend in the width direction of the tray 200 and arranged close to a side edge of the tray 200 in the length direction.

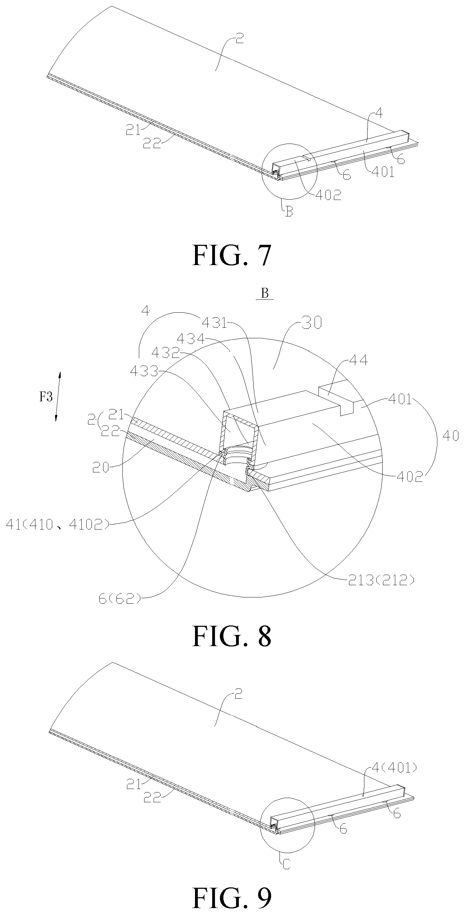

Referring to FIG. 2, the bottom plate 2 has a bottom plate flow channel 20 therein, and the adapter piece 4 has a joining flow channel 40 therein. Referring to FIG. 6 and FIG. 8, the adapter piece 4 includes a first connecting portion 41 and a second connecting portion 42, where the first connecting portion 41 is connected to the bottom plate 2 to bring the joining flow channel 40 into communication with the bottom plate flow channel 20, the second connecting portion 42 is connected to the inner end 501 of the external connecting tube 5 to bring the joining flow channel 40 into communication with the external connecting tube 5, and the first connecting portion 41 and the second connecting portion 42 are buried in the first side beam 32. Therefore, the first side beam 32 can protect the first connecting portion 41 and the second connecting portion 42, that is, the connection portion of the adapter piece 4 to the bottom plate 2, and the connection portion of the adapter piece 4 and the external connecting tube 5, to improve the mounting reliability of the adapter piece 4 and reduce the risk of leakage of the cooling liquid at the connection portion.

It should be noted that the cooling liquid can flow from the external connecting tube 5 into the joining flow channel 40, and flow through the joining flow channel 40 to the bottom plate flow channel 20. Then, the cooling liquid flows through the bottom plate flow channel 20, passes through the joining flow channel 40 and flows out of the external connecting tube 5. The battery assembly 100 can be arranged above the bottom plate flow channel 20, and the cooling liquid can cool the battery assembly 100 when flows in the bottom plate flow channel 20.

In an example, referring to FIG. 6, the external connecting tube 5 can include a liquid inlet pipe 51 and a liquid outlet pipe 52, the joining flow channel 40 includes a first flow channel 401 and a second flow channel 402 separated from each other, the bottom plate flow channel 20 includes a temperature adjustment flow channel 201 and a confluence flow channel 202, the liquid inlet pipe 51 communicates with the first flow channel 401, the liquid outlet pipe 52 communicates with the second flow channel 402, the first flow channel 401 communicates with the flow channel 201, and the second flow channel 402 communicates with the confluence flow channel 202. The cooling liquid flows through the liquid inlet pipe 51 into the first flow channel 401, then flows from the first flow channel 401 to the temperature adjustment flow channel 201 and then to the confluence flow channel 202 after flowing through the temperature adjustment flow channel 201, subsequently flows from the confluence flow channel 202 to the second flow channel 402, and then flows out of the liquid outlet pipe 52. In this embodiment, the battery assembly 100 can be located above the temperature adjustment flow channel 201, or above the temperature adjustment flow channel 201 and the confluence flow channel 202.

The adapter piece 4 is connected to the external connecting tube 5, such that the external connecting tube 5 is arranged at the same side of the bottom plate 2, giving rise to a small size of the tray 200. Moreover, by arranging the adapter piece 4 at a side of the bottom plate 2 in the thickness direction and connecting the external connecting tube 5 to the adapter piece 4, the diameter of the external connecting tube 5 is allowed not to be affected by the thickness of the bottom plate 2. With a small thickness of the bottom plate 2, an external connecting tube 5 having a large diameter can be used, to reduce the flow resistance of the cooling liquid. For example, the diameter of the liquid inlet pipe 51 and the liquid outlet pipe 52 is allowed not to be affected by the thickness of the bottom plate 2. With a small thickness of the bottom plate 2, a liquid inlet pipe 51 and a liquid outlet pipe 52 having a large diameter can be used, to reduce the flow resistance of the cooling liquid.

In some embodiments of the present invention, as shown in FIG. 5, the adapter piece 4 is in clearance fit with a groove wall of the first accommodating groove 321. Namely, the adapter piece 4 does not contact the groove wall of the first accommodating groove 321, to avoid the problem of pressure caused by the first side beam 32 to the adapter piece 4, and further protect the adapter piece 4.

In some embodiments of the present invention, the first connecting portion 41 is welded to the bottom plate 2, since the connection by welding is a relatively stable connection. Therefore, the first connecting portion 41 can be simply and reliably connected to the bottom plate 2, to reduce the risk of disconnection of the first connecting portion 41 from the bottom plate 2, and reduce the risk of leakage of the cooling liquid at the first connecting portion 41.

In some embodiments of the present invention, the second connecting portion 42 is welded to the inner end 501 of the external connecting tube 5, since the connection by welding is a relatively stable connection. Therefore, the second connecting portion 42 can be simply and reliably connected to the external connecting tube 5, to reduce the risk of disconnection of the second connecting portion 42 from the external connecting tube 5, and reduce the risk of leakage of the cooling liquid at the second connecting portion 42.

According to some embodiments of the present invention, as shown in FIG. 2 and FIG. 3, the bottom plate 2 is provided with a communicating liquid port 213 on a surface at one of the two sides in the thickness direction facing the adapter piece 4. Referring to FIG. 8, the first connecting portion 41 is constructed as a bottom plate connection port 410, the tray 200 further includes a welded connecting tube 6, one end of the welded connecting tube 6 is inserted into and welded to the communicating liquid port 213, and the other end of the welded connecting tube 6 is inserted into and welded to the bottom plate connection port 410, so that the first connecting portion 41 is welded to the bottom plate 2.

Therefore, by arranging the communicating liquid port 213 and the bottom plate connection port 410, the welded connecting tube 6 can be conveniently connected, to bring the bottom plate flow channel 20 into communication with the joining flow channel 40 by the welded connecting tube 6. Therefore, by directing the cooling liquid by the welded connecting tube 6, the cooling liquid can smoothly flow from the joining flow channel 40 to the bottom plate flow channel 20. Therefore, the difficulty and complexity of bringing the adapter piece 4 and the bottom plate 2 into communication are reduced the structure is simplified, and the connection of the first connecting portion 41 to the bottom plate 2 by welding is promoted.

Moreover, referring to FIG. 8, the diameter of the welded connecting tube 6 can be manufactured according to the diameters of the communicating liquid port 213 and the bottom plate connection port 410. Since the communicating liquid port 213 is located on the surface at the side of the bottom plate 2 in the thickness direction facing the adapter piece 4, the port diameter of the communicating liquid port 213 is not limited by the thickness of the bottom plate 2. Therefore, the communicating liquid port 213 can be large. The bottom plate connection port 410 is provided on the surface of the adapter piece 4 at the side facing the bottom plate 2 and can also be large without limitation by the thickness of the adapter piece 4, so a welded connecting tube 6 with a larger diameter can be used, to further reduce the flow resistance of the cooling liquid, and save the energy consumption.

Referring to FIG. 6, in some embodiments of the present invention, the second connecting portion 42 is constructed as a connecting tube connection port 420, and the inner end 501 of the external connecting tube 5 is inserted into and welded to the connecting tube connection port 420, so the second connecting portion 42 is welded to the external connecting tube 5. Therefore, the connecting tube connection port 420 can provide a mounting environment for the external connecting tube 5, and the inner end 501 of the external connecting tube 5 is inserted into and welded to the connecting tube connection port 420, so the second connecting portion 42 can be reliably connected to the external connecting tube 5, to reduce the risk of disconnection of the second connecting portion 42 from the external connecting tube 5.

According to some embodiments of the present invention, as shown in FIG. 5, the outer end 502 of the external connecting tube 5 is exposed at the side of the first side beam 32 away from the accommodating cavity 30. As such, the connection of the external connecting tube 5 to other cooling liquid accommodating devices is facilitated, to introduce the cooling liquid into the tray 200 or discharge the cooling liquid from the tray 200. Moreover, the second connecting portion 42 is located at the side of the adapter piece 4 away from the accommodating cavity 30, to facilitate the connection of the second connecting portion 42 to the external connecting tube 5.

For example, in an example shown in FIG. 8, the adapter piece 4 can include a bottom surface 432, a top surface 431, an inner side surface 433 and an outer side surface 434. The bottom surface 432 is arranged opposite to the top surface 431; and in the thickness direction F3 of the bottom plate 2, the bottom surface 432 is spaced from the top surface 431, and the top surface 431 is located at the side of the bottom surface 432 away from the bottom plate 2. The inner side surface 433 and the outer side surface 434 are connected between the top surface 431 and the bottom surface 432, and the inner side surface 433 is arranged closer to the central point of the bottom plate 2 than the outer side surface 434.

Referring to FIG. 6, the connecting tube connection port 420 is formed on the outer side surface 434 of the adapter piece 4. It can be understood that the bottom surface 432, the top surface 431, the inner side surface 433 and the outer side surface 434 can define the joining flow channel 40, and the connecting tube connection port 420 is formed on the outer side surface 434 of the adapter piece 4 so as to locate at the side of the adapter piece 4 away from the accommodating cavity 30. Therefore, the external connecting tube 5 can be inserted into the outer side surface 434 from the outside to the inside, to bring the external connecting tube 5 into communication with the joining flow channel 40, and expose the outer end 502 of the external connecting tube 5 at the side of the first side beam 32 away from the accommodating cavity 30.

As shown in FIG. 5, in some embodiments of the present invention, the central axis L2 of the external connecting tube 5 is perpendicular to the length direction F4 of the adapter piece 4, and perpendicular to the thickness direction F3 of the bottom plate 2. Referring to FIG. 2, the length direction F4 of the adapter piece 4 is the second direction F2, and the extending direction of the central axis L2 of the external connecting tube 5 is the first direction F1. This facilitates the positioning, mounting and arrangement of the external connecting tube 5.

In a possible implementation, referring to FIG. 6, the external connecting tube 5 can include a liquid inlet pipe 51 and a liquid outlet pipe 52, Therefore, the positioning, mounting and arrangement of the liquid inlet pipe 51 and the liquid outlet pipe 52 are also facilitated. As shown in FIG. 2, the arrangement of multiple bottom plate connection ports 410 on the adapter piece 4 is also facilitated. The bottom plate connection ports 410 can include a first connection port 4101 and a second connection port 4102, and the communicating liquid port 213 can include a liquid inlet 211 and a liquid outlet 212. The liquid inlet 211 is connected to the first connection port 4101 in one-to-one correspondence, and the liquid outlet 212 is connected to the second connection port 4102 in one-to-one correspondence.

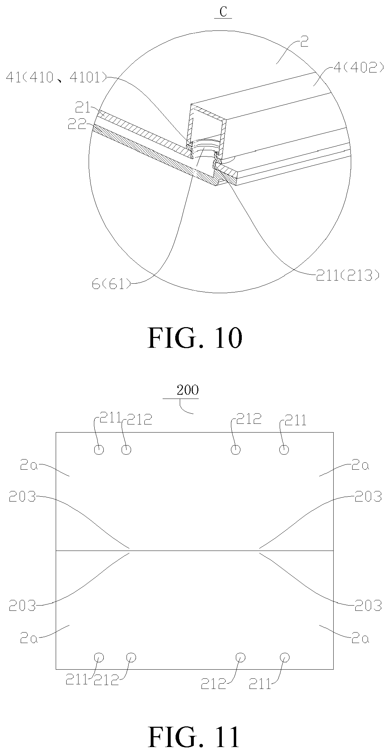

According to some embodiments of the present invention, referring to FIG. 2 and FIG. 3, the surface of the bottom plate 2 at one of two sides in the thickness direction facing the adapter piece 4 is provided with a liquid inlet 211 and a liquid outlet 212. The liquid inlet 211 communicates with the temperature adjustment flow channel 201, and the liquid outlet 212 communicates with the confluence flow channel 202. The surface of the adapter piece 4 at the side facing the bottom plate 2 is provided with a first connection port 4101 and a second connection port 4102. The first connection port 4101 communicates with the liquid inlet 211, and the second connection port 4102 communicates with the liquid outlet 212. Referring to FIG. 8 and FIG. 10, the welded connecting tube 6 can include a first connecting tube 61 and a second connecting tube 62. One end of the first connecting tube 61 is inserted into and fitted to the liquid inlet 211, and the other end of the first connecting tube 61 is inserted into and fitted to the first connection port 4101. One end of the second connecting tube 62 is inserted into and fitted to the liquid outlet 212, and the other end of the second connecting tube 62 is inserted into and fitted to the second connection port 4102.

As such, by arranging the liquid inlet 211 and the first connection port 4101 as described above, the mounting of the first connecting tube 61 is facilitated, to bring the temperature adjustment flow channel 201 into communication with the first flow channel 401 by the first connecting tube 61. Therefore, by directing the cooling liquid by the first connecting tube 61, the cooling liquid is allowed to flow smoothly from the first flow channel 401 to the temperature adjustment flow channel 201. Similarly, by arranging the liquid outlet 212 and the second connection port 4102 as described above, the mounting of the second connecting tube 62 is facilitated, to bring the confluence flow channel 202 into communication with the second flow channel 402 by the second connecting tube 62. Therefore, by directing the cooling liquid by the second connecting tube 62, the cooling liquid is allowed to flow smoothly from the confluence flow channel 202 to the second flow channel 402. Therefore, the difficulty and complexity of bringing the adapter piece 4 and the bottom plate 2 into communication are reduced and the structure is simplified.

Moreover, the diameter of the first connecting tube 61 can be manufactured according to the diameter of the liquid inlet 211 and the first connection port 4101. Since the liquid inlet 211 is located on the surface of the bottom plate 2 at one of two sides in the thickness direction facing the adapter piece 4, the diameter of the liquid inlet 211 is not limited by the thickness of the bottom plate 2. Therefore, the liquid inlet 211 can be large. The first connection port 4101 is provided on the surface of the adapter piece 4 at the side facing the bottom plate 2, and can also be large without limitation by the thickness of the adapter piece 4. Similarly, the diameter of the second connecting tube 62 can be manufactured according to the diameter of the diameter of the liquid outlet 212 and the second connection port 4102. Since the liquid outlet 212 is located on the surface at the side of the bottom plate 2 in the thickness direction facing the adapter piece 4, the diameter of the liquid outlet 212 is not limited by the thickness of the bottom plate 2. Therefore, the liquid outlet 212 can be large. The second connection port 4102 is provided on the surface of the adapter piece 4 at the side facing the bottom plate 2, and can also be large without limitation by the thickness of the adapter piece 4. Therefore, a first connecting tube 61 and a second connecting tube 62 with a larger diameter can be used, to further reduce the flow resistance of the cooling liquid, and save the energy consumption.

As shown in FIG. 6, in some embodiments of the present invention, the surface of the adapter piece 4 at the side away from the accommodating cavity 30 is provided with a connecting tube connection port 420, and the connecting tube connection port 420 includes a liquid inlet connection port 4201 and a liquid outlet connection port 4202. The liquid inlet connection port 4201 communicates with the first flow channel 401, and the liquid outlet connection port 4202 communicates with the second flow channel 402. The outlet end of the liquid inlet pipe 51 is connected to the liquid inlet connection port 4201, to introduce the cooling liquid into the first flow channel 401; and the inlet end of the liquid outlet pipe 52 is connected to the liquid outlet connection port 4202, to discharge the cooling liquid from the second flow channel 402. Therefore, the liquid inlet connection port 4201 can facilitate the connection of the liquid inlet pipe 51, to bring the liquid inlet pipe 51 into communication with the first flow channel 401; and the liquid outlet connection port 4202 can facilitate the connection of the liquid outlet pipe 52, to bring the liquid outlet pipe 52 into communication with the second flow channel 402. Moreover, the connection of the liquid inlet pipe 51 and the liquid outlet pipe 52 with an external cooling liquid system is also facilitated.

According to some embodiments of the present invention, as shown in FIG. 6, a sink 311 is further formed on the first side beam 32, and the sink 311 communicates with the first accommodating groove 321. A first connecting tube accommodating groove 312 communicating with the sink 311 is formed on a bottom wall of the sink 311. The frame 3 further includes a mounting seat 33, where the mounting seat 33 is embedded in the sink 311 and a second connecting tube accommodating groove 331 is formed on the mounting seat 33. The inner end 501 of the external connecting tube 5 is received in a space defined by the first connecting tube accommodating groove 312 and the second connecting tube accommodating groove 331.

Therefore, by arranging the mounting seat 33, the space defined by first connecting tube accommodating groove 312 and the second connecting tube accommodating groove 331 can provide a mounting environment for the external connecting tube 5, and protect the external connecting tube 5. By arranging the sink 311, the mounting seat 33 can be effectively taken in, to improve the structure compactness of the battery pack 1000.

For example, as shown in FIG. 6, the first connecting tube accommodating groove 312 can include a second accommodating groove 3121 and a third accommodating groove 3122. The second connecting tube accommodating groove 331 can include a fourth accommodating groove 3311 and a fifth accommodating groove 3312. The inner end 501 of the liquid inlet pipe 51 is received in a space defined by the second accommodating groove 3121 and the fourth accommodating groove 3311 and is connected to the adapter piece 4, and the outer end 502 of the liquid inlet pipe 51 is exposed at the side of the first side beam 32 away from the accommodating cavity 30. The inner end 501 of the liquid outlet pipe 52 is received in a space defined by the third accommodating groove 3122 and the fifth accommodating groove 3312 and is connected to the adapter piece 4, and the outer end 502 of the liquid outlet pipe 52 is exposed at the side of the first side beam 32 away from the accommodating cavity 30.

Therefore, the inner end 501 of the liquid inlet pipe 51 facilitates the connection to the adapter piece 4 and can be protected by the first side beam 32; and the exposure of the outer end 502 of the liquid inlet pipe 51 at the first side beam 32 facilitates the connection of the liquid inlet pipe 51 to the external cooling liquid system. The inner end 501 of the liquid outlet pipe 52 facilitates the connection to the adapter piece 4 and can be protected by the first side beam 32; and the exposure of the outer end 502 of the liquid outlet pipe 52 at the first side beam 32 facilitates the connection of the liquid outlet pipe 52 to the external cooling liquid system.

Referring to FIG. 2, in some embodiments of the present invention, the bottom plate flow channel 20 includes a temperature adjustment flow channel 201 and a confluence flow channel 202, both the temperature adjustment flow channel 201 and the confluence flow channel 202 extend in the first direction F1, and the temperature adjustment flow channel 201 and the confluence flow channel 202 are arranged in the second direction F2. The second direction F2 intersects the first direction F1. The adapter piece 4 is located at a side of the bottom plate flow channel 20 in the first direction F1, the joining flow channel 40 includes a first flow channel 401 and a second flow channel 402 separated from each other, the first flow channel 401 communicates with the temperature adjustment flow channel 201, and the second flow channel 402 communicates with the confluence flow channel 202. One end of the temperature adjustment flow channel 201 away from the adapter piece 4 in the first direction F1 is an outlet end 2010, and one end of the confluence flow channel 202 away from the adapter piece 4 in the first direction F1 is an inlet end 2020. The outlet end 2010 of the temperature adjustment flow channel 201 communicates with the inlet end 2020 of the confluence flow channel 202. The external connecting tube 5 includes a liquid inlet pipe 51 and a liquid outlet pipe 52, where the liquid inlet pipe 51 communicates with the first flow channel 401, and the liquid outlet pipe 52 communicates with the second flow channel 402.

In some embodiments, referring to FIG. 2, the cooling liquid can enter the first flow channel 401 from the liquid inlet pipe 51, and flow through the first flow channel 401 to the temperature adjustment flow channel 201. The battery assembly 100 can be arranged opposite to the temperature adjustment flow channel 201, so the battery assembly 100 is cooled when the cooling liquid flows through the temperature adjustment flow channel 201. During the cooling process of the battery assembly 100, hot battery assembly 100 exchanges heat with the cooling liquid. Therefore, the temperature of the cooling liquid at the end of the temperature adjustment flow channel 201 away from the adapter piece 4 in the first direction F1 is high. The high-temperature cooling liquid flows through the confluence flow channel 202 to the second flow channel 402, and the cooling liquid in the second flow channel 402 flows out of the tray 200 through the liquid outlet pipe 52.

Since the liquid inlet pipe 51 is connected to the temperature adjustment flow channel 201 by the adapter piece 4 and the liquid outlet pipe 52 is connected to the confluence flow channel 202 by the adapter piece 4, the liquid inlet pipe 51 and the liquid outlet pipe 52 can be located at the same side of the bottom plate 2 in the first direction F1, giving rise to a small size of the tray 200 in the first direction F1. Moreover, by arranging the adapter piece 4 at a side of the bottom plate 2 in the thickness direction and connecting the liquid inlet pipe 51 and the liquid outlet pipe 52 to the adapter piece 4, the diameter of the liquid inlet pipe 51 and the liquid outlet pipe 52 is not affected by the thickness of the bottom plate 2. With a small thickness of the bottom plate 2, a liquid inlet pipe 51 and a liquid outlet pipe 52 having a large diameter can be used, to reduce the flow resistance of the cooling liquid.

Furthermore, for a serpentine flow channel in the related art, the temperature of a head flow channel section near the liquid inlet pipe is low, leading to a good cooling effect on the battery assembly at a corresponding position; and the temperature of a tail flow channel section near the liquid outlet pipe is high, causing a poor cooling effect on the battery assembly at a corresponding position. Therefore, the overall cooling uniformity of the battery pack is poor.

According to the tray 200 in accordance with the embodiment of the present invention, in some embodiments, the confluence flow channel 202 can be arranged to stagger from the battery assembly 100 in the vertical direction. That is, they are not rightly opposite to each other in the vertical direction, thereby avoiding the heat exchange of the confluence flow channel 202 with the battery assembly 100, and ensuring the cooling effect on the battery assembly 100. Namely, when the confluence flow channel 202 is arranged to stagger from the position of the battery assembly 100, the heat dissipation effect of the battery assembly 100 can be effectively ensured. Further, when multiple temperature adjustment flow channels 201 are provided and arranged in the second direction F2, since the length of each temperature adjustment flow channel 201 is short, and the temperature difference between the liquid inlet and outlet ends of each temperature adjustment flow channel 201 is small, the overall temperature of each temperature adjustment flow channel 201 is uniform and low. This improves the cooling consistency of the battery pack 1000.

Referring to FIG. 1 and FIG. 2, in some embodiments of the present invention, the first direction F1 is the length direction of the bottom plate 2, the second direction F2 is the width direction of the bottom plate 2, and the adapter piece 4 is provided at an end portion of the bottom plate 2 in the first direction F1. Therefore, the arrangement of the adapter piece 4 at an end portion of the bottom plate 2 can facilitate the mounting and fixation of the adapter piece 4, and simply and effectively ensure that the bottom plate 2 has a cooling effect in the entire length direction, to ensure the cooling effect of the bottom plate 2 on the battery assembly 100, simplify the structure of the bottom plate 2, and reduce the influence of the adapter piece 4 on the arrangement of the battery assembly 100. Definitely, the present invention is not limited thereto. In other embodiments of the present invention, the adapter piece 4 may also be provided in the middle or at other positions of the bottom plate 2, which will not be further described here.

In the description of the specification, the description with reference to the terms "an embodiment", "some embodiments", "example", "specific example", or "some example" and so on means that specific features, structures, materials or characteristics described in connection with the embodiment or example are embraced in at least one embodiment or example of the present invention. In the specification, the schematic expressions of the above terms do not necessarily refer to the same embodiment or example. Moreover, the described specific features, structures, materials or characteristics may be combined in any suitable manners in one or more embodiments. In addition, where there are no contradictions, the various embodiments or examples described in the specification and features of various embodiments or examples can be combined by those skilled in the art.

Although the embodiments of the present invention have been shown and described, a person of ordinary skill in the art should understand that various changes, modifications, replacements and variations may be made to the embodiments without departing from the principles of the present invention, and the scope of the present invention is as defined by the appended claims.

List of reference numerals:
1000 battery pack;
100 battery assembly; 1a battery unit; 1 cell;
200 tray; 2a temperature adjustment unit; 2b preset unit;
2 bottom plate; 20 bottom plate flow channel;
201 temperature adjustment flow channel; 2010 outlet end;
202 confluence flow channel; 2020 inlet end;
203 communicating flow channel;
21 first bottom plate; 211 liquid inlet; 212 liquid outlet; 213 communicating liquid port;
22 second bottom plate;
23 first end portion; 24 second end portion;
3 frame; 30 accommodating cavity;
31 support beam; 311 sink; 312 first connecting tube accommodating groove;
3121 second accommodating groove; 3122 third accommodating groove;
32 first side beam; 321 first accommodating groove;
33 mounting seat; 331 second connecting tube accommodating groove;
3311 fourth accommodating groove; 3312 fifth accommodating groove;
4 adapter piece; 40 joining flow channel; 401 first flow channel; 402 second flow channel;
41 first connecting portion; 410 bottom plate connection port; 4101 first connection port; 4102 second connection port;
42 second connecting portion; 420 connecting tube connection port; 4201 liquid inlet connection port; 4202 liquid outlet connection port;
431 top surface; 432 bottom surface; 433 inner side surface; 434 outer side surface;
44 partition groove;
5 external connecting tube; 501 inner end; 502 outer end; 51 liquid inlet pipe; 52 liquid outlet pipe;
6 welded connecting tube; 61 first connecting tube; 62 second connecting tube.

## Claims

1. A battery pack (1000), comprising:
a battery assembly (100), wherein the battery assembly (100) comprises at least one battery unit (1a), the battery unit (1a) comprises a plurality of cells (1), the length direction of each cell (1) is a first direction (F1), and the plurality of cells (1) are arranged in a second direction (F2); and
a tray (200), wherein the tray (200) comprises at least one temperature adjustment unit (2a),
the temperature adjustment unit (2a) comprises a bottom plate (2) and at least one temperature adjustment flow channel (201) and a confluence flow channel (202) formed on the bottom plate (2), the at least one temperature adjustment flow channel (201) is arranged opposite to the battery unit (1a) in a vertical direction to exchange heat with a cell of the plurality of cells (1), the at least one temperature adjustment flow channel (201) and the confluence flow channel (202) both extend in the first direction (F1), and the at least one temperature adjustment flow channel (201) and the confluence flow channel (202) are arranged in the second direction (F2); and in the first direction (F1), one end of the at least one temperature adjustment flow channel (201) is an outlet end (2010), one end of the confluence flow channel (202) close to the outlet end (2010) is an inlet end (2020), the outlet end (2010) of the at least one temperature adjustment flow channel (201) communicates with the inlet end (2020) of the confluence flow channel (202), the second direction (F2) intersects the first direction (F1), each of the at least one temperature adjustment flow channels (201) exchanges heat with at least one cell (1) arranged in the second direction (F2), and exchanges heat with at most one cell (1) extending in the first direction (F1), **characterized in that** the confluence flow channel (202) is arranged staggered from the battery unit (1a) in the vertical direction to prevent heat exchange with the plurality of cells (1).

2. The battery pack (1000) according to claim 1, wherein the temperature adjustment unit (2a) further comprises: a communicating flow channel (203), a liquid inlet (211) and liquid outlet (212) formed on the bottom plate (2), wherein the liquid inlet (211) communicates with the temperature adjustment flow channel (201), the liquid outlet (212) communicates with the confluence flow channel (202), the communicating flow channel (203) is located at the same side of the at least one temperature adjustment flow channel (201) and the confluence flow channel (202) in the first direction (F1) and adjacent to the outlet end (2010) of the at least one temperature adjustment flow channel (201) and the inlet end (2020) of the confluence flow channel (202), the communicating flow channel (203) brings the outlet end (2010) of the at least one temperature adjustment flow channel (201) into communication with the inlet end (2020) of the confluence flow channel (202), and the liquid inlet (211) and the liquid outlet (212) are both located at a side of the at least one temperature adjustment flow channel (201) and the confluence flow channel (202) away from the communicating flow channel (203) in the first direction (F1).

3. The battery pack (1000) according to claim 2, wherein two ends of the bottom plate (2) in the first direction (F1) are respectively a first end portion (23) and a second end portion (24), the liquid inlet (211) and the liquid outlet (212) are both located at the first end portion (23), and the communicating flow channel (203) is located at the second end portion (24).

4. The battery pack (1000) according to claim 2 or 3, wherein the bottom plate (2) comprises a first bottom plate (21) and a second bottom plate (22) arranged opposite to each other in a thickness direction (F3) of the bottom plate (2), the at least one temperature adjustment flow channel (201) and the confluence flow channel (202) are defined between the first bottom plate (21) and the second bottom plate (22), and the liquid inlet (211) and the liquid outlet (212) are formed to penetrate through the first bottom plate (21).

5. The battery pack (1000) according to any one of claims 1 to 4, wherein the temperature adjustment unit (2a) comprises N temperature adjustment flow channels (201) and M confluence flow channels (202), wherein M is an integer greater than or equal to 1, and N is an integer greater than or equal to 1; and the sum of width of the N temperature adjustment flow channels (201) in each temperature adjustment unit (2a) is greater than the sum of width of the M confluence flow channels (202).

6. The battery pack (1000) according to any one of claims 1 to 5, wherein the at least one temperature adjustment unit (2a) is a preset unit (2b), the preset unit (2b) comprises a plurality of temperature adjustment flow channels (201) and a single confluence flow channel (202), and the outlet end (2010) of each temperature adjustment flow channel (201) communicates with the inlet end (2020) of the confluence flow channel (202).

7. The battery pack (1000) according to claim 6, wherein all of the temperature adjustment flow channels (201) in the preset unit (2b) are located at the same side of the confluence flow channel (202) in the second direction (F2).

8. The battery pack (1000) according to claim 7, wherein the tray (200) comprises two said preset units (2b), and these two preset units (2b) are arranged at an interval in the second direction (F2).

9. The battery pack (1000) according to claim 8, wherein the tray (200) further comprises a frame (3), the frame (3) is connected to the bottom plate (2) and defines an accommodating cavity (30) with the bottom plate (2), the frame (3) comprises a support beam (31) extending in the first direction (F1), the support beam (31) is located above a portion between the two preset units (2b), and the confluence flow channel (202) in each preset unit (2b) is arranged opposite to the support beam (31) in the vertical direction.

10. The battery pack (1000) according to any one of claims 1 to 9, wherein the at least one temperature adjustment unit (2a) comprises:
an adapter piece (4), wherein the adapter piece (4) has a first flow channel (401) and a second flow channel (402) separated from each other therein, the first flow channel (401) communicates with the at least one temperature adjustment flow channel (201), and the second flow channel (402) communicates with the confluence flow channel (202); and
an external connecting tube (5), wherein the external connecting tube (5) comprises a liquid inlet pipe (51) and a liquid outlet pipe (52), the liquid inlet pipe (51) is connected to the adapter piece (4) and communicates with the first flow channel (401), and the liquid outlet pipe (52) is connected to the adapter piece (4) and communicates with the second flow channel (402).

## Patentansprüche

1. Batteriepack (1000), umfassend:
eine Batterieanordnung (100), wobei die Batterieanordnung (100) mindestens eine Batterieeinheit (1a) umfasst, die Batterieeinheit (1a) eine Vielzahl von Zellen (1) umfasst, die Längsrichtung jeder Zelle (1) eine erste Richtung (F1) ist, und die Vielzahl von Zellen (1) in einer zweiten Richtung (F2) angeordnet sind; und
ein Tablett (200), wobei das Tablett (200) mindestens eine Temperatureinstellungseinheit (2a) umfasst,
die Temperaturanpassungseinheit (2a) eine Bodenplatte (2) und mindestens einen Temperaturanpassungsströmungskanal (201) und einen Zusammenflussströmungskanal bzw. Konfluenzströmungskanal (202) umfasst, die auf der Bodenplatte (2) ausgebildet sind, wobei der mindestens eine Temperaturanpassungsströmungskanal (201) gegenüber der Batterieeinheit (1a) in einer vertikalen Richtung angeordnet ist, um Wärme mit einer Zelle der Vielzahl von Zellen (1) auszutauschen, der mindestens eine Temperaturanpassungsströmungskanal (201) und der Konfluenzströmungskanal (202) sich beide in der ersten Richtung (F1) erstrecken, und der mindestens eine Temperaturanpassungsströmungskanal (201) und der Konfluenzströmungskanal (202) in der zweiten Richtung (F2) angeordnet sind; und in der ersten Richtung (F1) ein Ende des mindestens einen Temperaturanpassungsströmungskanals (201) ein Auslassende (2010) ist, ein Ende des Zusammenflussströmungskanals (202) nahe dem Auslassende (2010) ein Einlassende (2020) ist, das Auslassende (2010) des mindestens einen Temperaturanpassungsströmungskanals (201) mit dem Einlassende (2020) des Zusammenflussströmungskanals (202) in Verbindung steht, die zweite Richtung (F2) die erste Richtung (F1) schneidet, jeder der mindestens einen Temperaturanpassungs-Strömungskanäle (201) mit mindestens einer in der zweiten Richtung (F2) angeordneten Zelle (1) Wärme austauscht und mit höchstens einer sich in der ersten Richtung (F1) erstreckenden Zelle (1) Wärme austauscht, **dadurch gekennzeichnet, dass** der Konfluenz-Strömungskanal (202) von der Batterieeinheit (1a) in der vertikalen Richtung versetzt angeordnet ist, um einen Wärmeaustausch mit der Vielzahl von Zellen (1) zu verhindern.

2. Batteriepack (1000) gemäß Anspruch 1, wobei die Temperatureinstellungseinheit (2a) ferner umfasst einen kommunizierenden Strömungskanal (203), einen Flüssigkeitseinlass (211) und einen Flüssigkeitsauslass (212), die auf der Bodenplatte (2) ausgebildet sind, wobei der Flüssigkeitseinlass (211) mit dem Temperaturanpassungsströmungskanal (201) in Verbindung steht und der Flüssigkeitsauslass (212) mit dem Zusammenflussströmungskanal (202) in Verbindung steht, der kommunizierende Strömungskanal (203) in der ersten Richtung (F1) auf derselben Seite des mindestens einen Temperaturanpassungs-Strömungskanals (201) und des Zusammenfluss-Strömungskanals (202) und neben dem Auslassende (2010) des mindestens einen Temperaturanpassungs-Strömungskanals (201) und dem Einlassende (2020) des Zusammenfluss-Strömungskanals (202) angeordnet ist, der kommunizierende Strömungskanal (203) das Auslassende (2010) des mindestens einen Temperaturanpassungs-Strömungskanals (201) in Verbindung mit dem Einlassende (2020) des Zusammenfluss-Strömungskanals (202) bringt, und der Flüssigkeitseinlass (211) und der Flüssigkeitsauslass (212) beide an einer Seite des Temperaturanpassungs-Strömungskanals (201) und des Zusammenfluss-Strömungskanals (202) entfernt von dem kommunizierenden Strömungskanal (203) in der ersten Richtung (F1) angeordnet sind.

3. Batteriepack (1000) gemäß Anspruch 2, wobei zwei Enden der Bodenplatte (2) in der ersten Richtung (F1) jeweils ein erster Endabschnitt (23) und ein zweiter Endabschnitt (24) sind, der Flüssigkeitseinlass (211) und der Flüssigkeitsauslass (212) beide an dem ersten Endabschnitt (23) angeordnet sind und der kommunizierende Strömungskanal (203) an dem zweiten Endabschnitt (24) angeordnet ist.

4. Batteriepack (1000) gemäß Anspruch 2 oder 3, wobei die Bodenplatte (2) eine erste Bodenplatte (21) und eine zweite Bodenplatte (22) umfasst, die in einer Dickenrichtung (F3) der Bodenplatte (2) einander gegenüberliegend angeordnet sind, der mindestens eine Temperaturanpassungsströmungskanal (201) und der Zusammenflussströmungskanal (202) zwischen der ersten Bodenplatte (21) und der zweiten Bodenplatte (22) definiert sind, und der Flüssigkeitseinlass (211) und der Flüssigkeitsauslass (212) so ausgebildet sind, dass sie die erste Bodenplatte (21) durchdringen.

5. Batteriepack (1000) gemäß einem der Ansprüche 1 bis 4, wobei die Temperatureinstellungseinheit (2a) N Temperatureinstellungs-Strömungskanäle (201) und M Zusammenfluss-Strömungskanäle (202) umfasst, wobei M eine ganze Zahl größer oder gleich 1 ist und N eine ganze Zahl größer oder gleich 1 ist; und die Summe der Breite der N Temperatureinstellungs-Strömungskanäle (201) in jeder Temperatureinstellungseinheit (2a) größer ist als die Summe der Breite der M Zusammenfluss-Strömungskanäle (202).

6. Batteriepack (1000) gemäß einem der Ansprüche 1 bis 5, wobei die mindestens eine Temperatureinstellungseinheit (2a) eine voreingestellte Einheit (2b) ist, die voreingestellte Einheit (2b) eine Mehrzahl von Temperatureinstellungs-Strömungskanälen (201) und einen einzigen Zusammenfluss-Strömungskanal (202) umfasst, und das Auslassende (2010) jedes Temperatureinstellungs-Strömungskanals (201) mit dem Einlassende (2020) des Zusammenfluss-Strömungskanals (202) in Verbindung steht.

7. Batteriepack (1000) gemäß Anspruch 6, wobei alle Temperaturanpassungs-Strömungskanäle (201) in der voreingestellten Einheit (2b) auf derselben Seite des Einmündungs-Strömungskanals (202) in der zweiten Richtung (F2) angeordnet sind.

8. Batteriepack (1000) gemäß Anspruch 7, wobei das Tablett (200) zwei der genannten Voreinstellungseinheiten (2b) umfasst, und diese beiden Voreinstellungseinheiten (2b) in der zweiten Richtung (F2) in einem Abstand angeordnet sind.

9. Batteriepack (1000) gemäß Anspruch 8, wobei das Tablett (200) ferner einen Rahmen (3) umfasst, der Rahmen (3) mit der Bodenplatte (2) verbunden ist und mit der Bodenplatte (2) einen Aufnahmehohlraum (30) definiert, der Rahmen (3) einen sich in der ersten Richtung (F1) erstreckenden Stützbalken (31) umfasst, der Stützbalken (31) oberhalb eines Abschnitts zwischen den beiden voreingestellten Einheiten (2b) angeordnet ist, und der Zusammenflusskanal (202) in jeder voreingestellten Einheit (2b) in der vertikalen Richtung gegenüber dem Stützbalken (31) angeordnet ist.

10. Batteriepack (1000) gemäß einem der Ansprüche 1 bis 9, wobei die mindestens eine Temperatureinstellungseinheit (2a) umfasst
ein Adapterstück (4), wobei das Adapterstück (4) einen ersten Strömungskanal (401) und einen zweiten Strömungskanal (402) aufweist, die darin voneinander getrennt sind, wobei der erste Strömungskanal (401) mit dem mindestens einen Temperaturanpassungsströmungskanal (201) in Verbindung steht, und der zweite Strömungskanal (402) mit dem Zusammenflussströmungskanal (202) in Verbindung steht; und
ein externes Verbindungsrohr (5), wobei das externe Verbindungsrohr (5) ein Flüssigkeitseinlassrohr (51) und ein Flüssigkeitsauslassrohr (52) umfasst, das Flüssigkeitseinlassrohr (51) mit dem Adapterstück (4) verbunden ist und mit dem ersten Strömungskanal (401) in Verbindung steht, und das Flüssigkeitsauslassrohr (52) mit dem Adapter-stück (4) verbunden ist und mit dem zweiten Strömungskanal (402) in Verbindung steht.

## Revendications

1. Bloc de batterie (1000), comprenant :
un ensemble de batterie (100), dans lequel l'ensemble de batterie (100) comprend au moins une unité de batterie (1a), l'unité de batterie (1a) comprend une pluralité de cellules (1), la direction de longueur de chaque cellule (1) est une première direction (F1), et la pluralité de cellules (1) sont disposées dans une deuxième direction (F2) ; et
un plateau (200), dans lequel le plateau (200) comprend au moins une unité d'ajustement de la température (2a),
l'unité d'ajustement de la température (2a) comprend une plaque de fond (2) et au moins un canal d'écoulement d'ajustement de la température (201) et un canal d'écoulement de confluence (202) formés sur la plaque de fond (2), l'au moins un canal d'écoulement d'ajustement de la température (201) est ajusté à l'opposé de l'unité de batterie (1a) dans une direction verticale pour échanger de la chaleur avec une cellule de la pluralité de cellules (1), le au moins un canal d'écoulement d'ajustement de la température (201) et le canal d'écoulement de confluence (202) s'étendent tous deux dans la première direction (F1), et le au moins un canal d'écoulement d'ajustement de la température (201) et le canal d'écoulement de confluence (202) sont disposés dans la deuxième direction (F2) ; et dans la première direction (F1), une extrémité du au moins un canal d'écoulement d'ajustement de la température (201) est une extrémité de sortie (2010), une extrémité du canal d'écoulement de confluence (202) proche de l'extrémité de sortie (2010) est une extrémité d'entrée (2020), l'extrémité de sortie (2010) du au moins un canal d'écoulement d'ajustement de la température (201) communique avec l'extrémité d'entrée (2020) du canal d'écoulement de confluence (202), la deuxième direction (F2) croise la première direction (F1), chacun des au moins un canal d'écoulement d'ajustement de la température (201) échange de la chaleur avec au moins une cellule (1) disposée dans la deuxième direction (F2), et échange de la chaleur avec au plus une cellule (1) s'étendant dans la première direction (F1), **caractérisé en ce que** le canal d'écoulement de confluence (202) est disposé en quinconce par rapport à l'unité de batterie (1a) dans la direction verticale pour empêcher l'échange de chaleur avec la pluralité de cellules (1).

2. Bloc de batterie (1000) selon la revendication 1, dans lequel l'unité d'ajustement de la température (2a) comprend en outre : un canal d'écoulement communicant (203), une entrée de liquide (211) et une sortie de liquide (212) formés sur la plaque inférieure (2), dans lequel l'entrée de liquide (211) communique avec le canal d'écoulement d'ajustement de la température (201), la sortie de liquide (212) communique avec le canal d'écoulement de confluence (202), le canal d'écoulement communicant (203) est situé du même côté que l'au moins un canal d'écoulement d'ajustement de la température (201) et le canal d'écoulement de confluence (202) dans la première direction (F1) et adjacent à l'extrémité de sortie (2010) de l'au moins un canal d'écoulement d'ajustement de la température (201) et à l'extrémité d'entrée (2020) du canal d'écoulement de confluence (202), le canal d'écoulement communicant (203) met l'extrémité de sortie (2010) du au moins un canal d'écoulement d'ajustement de la température (201) en communication avec l'extrémité d'entrée (2020) du canal d'écoulement de confluence (202), et l'entrée de liquide (211) et la sortie de liquide (212) sont toutes deux situées sur un côté du canal d'écoulement d'ajustement de la température (201) et du canal d'écoulement de confluence (202) à l'écart du canal d'écoulement communicant (203) dans la première direction (F1).

3. Bloc de batterie (1000) selon la revendication 2, dans lequel deux extrémités de la plaque de fond (2) dans la première direction (F1) sont respectivement une première partie d'extrémité (23) et une deuxième partie d'extrémité (24), l'entrée de liquide (211) et la sortie de liquide (212) sont toutes deux situées au niveau de la première partie d'extrémité (23), et le canal d'écoulement communicant (203) est situé au niveau de la deuxième partie d'extrémité (24).

4. Bloc batterie (1000) selon la revendication 2 ou 3, dans lequel la plaque de fond (2) comprend une première plaque de fond (21) et une deuxième plaque de fond (22) disposées en vis-à-vis dans une direction d'épaisseur (F3) de la plaque de fond (2), l'au moins un canal d'écoulement d'ajustement de température (201) et le canal d'écoulement de confluence (202) sont définis entre la première plaque de fond (21) et la deuxième plaque de fond (22), et l'entrée de liquide (211) et la sortie de liquide (212) sont formées pour pénétrer à travers la première plaque de fond (21).

5. Bloc de batterie (1000) selon l'une quelconque des revendications 1 à 4, dans lequel l'unité d'ajustement de la température (2a) comprend N canaux d'écoulement d'ajustement de la température (201) et M canaux d'écoulement de confluence (202), dans lesquels M est un nombre entier supérieur ou égal à 1, et N est un nombre entier supérieur ou égal à 1, la somme de la largeur des N canaux d'écoulement d'ajustement de la température (201) dans chaque unité d'ajustement de la température (2a) est supérieure à la somme de la largeur des M canaux d'écoulement de confluence (202).

6. Bloc batterie (1000) selon l'une quelconque des revendications 1 à 5, dans lequel l'au moins une unité d'ajustement de température (2a) est une unité de préréglage (2b), l'unité de préréglage (2b) comprend une pluralité de canaux d'écoulement d'ajustement de température (201) et un seul canal d'écoulement de confluence (202), et l'extrémité de sortie (2010) de chaque canal d'écoulement d'ajustement de température (201) communique avec l'extrémité d'entrée (2020) du canal d'écoulement de confluence (202).

7. Bloc batterie (1000) selon la revendication 6, dans lequel tous les canaux d'écoulement d'ajustement de température (201) de l'unité de préréglage (2b) sont situés du même côté du canal d'écoulement de confluence (202) dans la deuxième direction (F2).

8. Bloc de batteries (1000) selon la revendication 7, dans lequel le plateau (200) comprend deux dites unités de préréglage (2b), et ces deux unités de préréglage (2b) sont disposées à un intervalle dans la deuxième direction (F2).

9. Ensemble de batteries (1000) selon la revendication 8, dans lequel le plateau (200) comprend en outre un cadre (3), le cadre (3) est relié à la plaque de fond (2) et définit une cavité d'accueil (30) avec la plaque de fond (2), le cadre (3) comprend une poutre de support (31) s'étendant dans la première direction (F1), la poutre de support (31) est située au-dessus d'une partie entre les deux unités de préréglage (2b), et le canal d'écoulement de confluence (202) dans chaque unité de préréglage (2b) est disposé à l'opposé de la poutre de support (31) dans la direction verticale.

10. Bloc de batterie (1000) selon l'une quelconque des revendications 1 à 9, dans lequel l'au moins une unité d'ajustement de la température (2a) comprend :
une pièce d'adaptation (4), dans laquelle la pièce d'adaptation (4) présente un premier canal d'écoulement (401) et un deuxième canal d'écoulement (402) séparés l'un de l'autre à l'intérieur, le premier canal d'écoulement (401) communique avec le au moins un canal d'écoulement d'ajustement de la température (201), et le deuxième canal d'écoulement (402) communique avec le canal d'écoulement de confluence (202) ; et
un tube de connexion externe (5), dans lequel le tube de connexion externe (5) comprend un tuyau d'entrée de liquide (51) et un tuyau de sortie de liquide (52), le tuyau d'entrée de liquide (51) est connecté à la pièce d'adaptation (4) et communique avec le premier canal d'écoulement (401), et le tuyau de sortie de liquide (52) est connecté à la pièce d'adaptation (4) et communique avec le deuxième canal d'écoulement (402).
